# EUROPÄISCHE PATENTSCHRIFT

(11) **EP 2 402 722 B1**
(45) Veröffentlichungstag und Bekanntmachung des Hinweises auf die Patenterteilung: **29.06.2016**
(21) Anmeldenummer: 11165127.9
(22) Anmeldetag: 06.05.2011
(51) Int. Cl.: G01F 1/46, G01P 5/16

(54) **Einrichtung zur Messung der Geschwindigkeit eines Fluids**
Device for measuring the speed of a fluid
Dispositif de mesure de la vitesse d'un fluide

(30) Priorität: 10.06.2010 DE 202010007801 U
(43) Veröffentlichungstag der Anmeldung: 04.01.2012
(73) Patentinhaber: Woelke Industrieelektronik GmbH, 42551 Velbert (DE)
(72) Erfinder: Baumgärtner, Christoph, 47506 Neukirschen-Vluyn (DE)
(74) Vertreter: Nunnenkamp, Jörg

(56) Entgegenhaltungen:
- EP-A1- 1 296 118
- WO-A2-98/33071
- CN-Y- 2 287 296
- CN-Y- 2 535 778
- US-A- 3 572 117
- US-A- 3 796 095
- US-A- 4 768 386
- US-B1- 6 487 918

## Beschreibung

Die Erfindung betrifft eine Einrichtung zur Messung der Luftgeschwindigkeit in Absaugleitungen, mit einer Sonde, welche wenigstens zwei Messstellen zur Differenzdruckmessung aufweist, wobei die Sonde in der Art eines räumlichen Tragflächenprofils ausgebildet ist.

Bei dem hinsichtlich seiner Geschwindigkeit zu untersuchenden Fluid handelt es sich im Allgemeinen um ein gasförmiges Fluid. Grundsätzlich kann mit Hilfe der nachfolgend noch zu beschreibenden Einrichtung aber auch ein flüssiges Fluid bzw. eine Flüssigkeit hinsichtlich ihrer Geschwindigkeit untersucht werden. Für den Fall der Messung der Geschwindigkeit eines gasförmigen Fluids wird die fragliche Einrichtung mit Hilfe der Sonde in einer zugehörigen Leitung platziert. Bei dieser Leitung kann es sich um eine Absaugleitung handeln, wie sie beispielsweise im Rahmen der Bewetterung von Bergwerken zum Einsatz kommt. Das ist selbstverständlich nicht zwingend zu verstehen.

Insbesondere bei der Bewetterung von Bergwerken fällt nutzbares Gas, vorzugsweise Methan bzw. ein Methan-/Luftgemisch, an, welches als Stadtgas einer weiteren Verwendung zugeführt werden kann. Das setzt allerdings die Kenntnis der ausströmenden Gasmenge an Methan im Beispielfall voraus. Zu diesem Zweck muss der Methangasgehalt in der abgesaugten Luft bekannt sein und im Übrigen die Luftgeschwindigkeit. Aus beiden Angaben kann dann auf die Menge des ausströmenden Methans rückgeschlossen werden.

Bei einer Einrichtung, wie sie beispielsweise in der DE 196 16 100 A1 vorgestellt wird, ist die Sonde so ausgelegt, dass diese mit einem teilweise zylindrischen sowie konischen Querschnitt an mindestens zwei Stellen ausgerüstet wird, an welchen Messstellen zur Differenzdruckmessung vorhanden sind. Die auf diese Weise ermittelten Druckmesswerte werden in elektrische Signale umgewandelt. Aus zugehörigen Mittelwerten einer Vielzahl von Druckmesswerten wird auf die Fördergeschwindigkeit rückgeschlossen. Die bekannte Einrichtung setzt eine speziell gestaltete Sonde mit relativ großen Ausmessungen voraus, die beispielsweise in einer Absaugleitung platziert werden muss. Daraus resultiert ein nicht unbeträchtlicher konstruktiver Aufwand.

Die Messung von verschiedenen Gasen oder Dämpfen in Luft und folglich die flankierende Bestimmung des Methangehaltes im Beispielfall kann unabhängig davon mit einem Sensorsystem vorgenommen werden, wie es in der DE 199 11 867 C2 zum Einsatz kommt. Das bekannte Sensorsystem greift auf einen Metalloxidsensor zurück, welcher über eine gassensitive Schicht verfügt. Die gassensitive Schicht lässt sich mit Hilfe einer Heizung elektrisch beheizen und gibt bei Beaufschlagung mit Gasen oder Dämpfen ein korrespondierendes Sensorsignal ab.

Ganz abgesehen davon kennt man aus der Praxis eine sogenannte Prandtlsonde, bei welcher es sich um ein strömungstechnisches Messinstrument zur Bestimmung des Staudruckes handelt. Das zugehörige Prandtlrohr verfügt über eine Öffnung in Strömungsrichtung zur Messung des Gesamtdruckes und ringförmig in einem Abstand zur Spitze und zum Schaft seitliche Bohrungen für die statische Druckmessung. Die Differenz dieser beiden Drücke kann gemessen werden. - Allerdings ist die Druckdifferenz bei dem besagten Prandtlrohr nicht besonders ausgeprägt, so dass Abstriche hinsichtlich der Messgenauigkeit gemacht werden müssen. Hinzu kommt, dass durch die erfolgende Staudruckmessung unkontrollierte Verschmutzungen auftreten können.
Im Rahmen der gattungsbildenden Lehre nach der EP 1 296 118 A1 wird eine Vorrichtung zur Messung eines Gasverbrauchs beschrieben. Zu diesem Zweck ist ein lagefixiertes Differenzdruckmittel vorgesehen, welches mit mehreren Einlassöffnungen und Auslassöffnungen ausgerüstet ist. Das zuvor bereits angesprochene Problem etwaiger Verschmutzungen wird nicht angesprochen.

Ähnliches gilt auch für die WO 98/33071 A2, welche sich mit der Bestimmung von Flugparametern befasst. Hier will die Erfindung insgesamt Abhilfe schaffen.

Der Erfindung liegt das technische Problem zugrunde, eine derartige Einrichtung zur Messung der Geschwindigkeit eines Fluids so weiterzuentwickeln, dass die Messgenauigkeit gesteigert ist und zugleich die Gefahr etwaiger Verschmutzungen weitgehend gebannt.

Zur Lösung dieser technischen Problemstellung ist eine gattungsgemäße Einrichtung zur Messung der Luftgeschwindigkeit in Absaugleitungen nach Anspruch 1 vorgesehen. Nach bevorzugter Ausführungsform wird in diesem Zusammenhang ein Dickenverhältnis für den Tragflächenprofilabschnitt von insbesondere 0,6 beobachtet.

Im Rahmen der Erfindung kommt also eine speziell gestaltete Sonde zum Einsatz, nämlich eine solche, die ähnlich einem räumlichen Tragflächenprofil ausgebildet ist, also vergleichbar einem Abschnitt einer Tragfläche für ein Flugzeug oder Rotorblatt gestaltet ist. Dabei wird im Allgemeinen so vorgegangen, dass die eine der beiden Messstellen an einer Profilvorderkante und die andere Messstelle an einer oder beiden Profilseitenkanten angeordnet sind. Tatsächlich werden in diesen Bereichen bei derartigen Tragflächenprofilen relativ große Geschwindigkeitsunterschiede beim Umströmen mit dem zu messenden Fluid beobachtet. Große Geschwindigkeitsunterschiede korrespondieren zu ausgeprägten Druckunterschieden und folglich einem hohen Differenzdruck. Dadurch kann die Messgenauigkeit gegenüber bisher eingesetzten Einrichtungen signifikant gesteigert werden.

Außerdem wird durch diese Auslegung erreicht, dass im Bereich beider Messstellen Wirbelablösungen de facto nicht auftreten. Als Folge hiervon ergeben sich auch keine ausgeprägten Druckschwankungen, so dass das insgesamt gemessene Differenzdrucksignal einen ruhigen Zeitverlauf aufweist und folglich für präzise Messungen besonders geeignet ist.

Hinzu kommt, dass sich ein derartiges räumliches Tragflächenprofil besonders vorteilhaft und einfach in eine Leitung einbauen lässt. Die hierfür erforderliche Baugröße ist gering. Außerdem wird das durch die Leitung geführte Fluid, insbesondere das gasförmige Fluid, durch die Sonde nicht oder praktisch nicht beeinflusst. Das lässt sich auf das besonders strömungsgünstige Profil der Sonde zurückführen.

Tatsächlich wird die Sonde innerhalb der Leitung bzw. Absaugleitung so platziert, dass das strömende Fluid zunächst auf die Profilvorderkante trifft und das räumliche Tragflächenprofil der Sonde nach Aufteilung des Stromes an seinen beiden Profilseitenkanten umströmt. Aufgrund dieser überwiegend verwirbelungsfreien Umströmung des räumlichen Tragflächenprofils ist ferner damit zu rechnen, dass Verschmutzungen insbesondere im Bereich der Messstelle nicht oder praktisch nicht auftreten. Allenfalls die überwiegend gerade Hinterkante mag gezielt für Schmutzansammlungen genutzt werden, die sich problemlos entfernen lassen. Die Messstellen werden jedenfalls von beispielsweise im gasförmigen Fluid mitgeführten Teilchen nicht beeinflusst.

Hinzu kommt, dass die Anordnung der Messstellen einerseits an der Profilvorderkante und andererseits an der Profilseitenkante die erfindungsgemäße Einrichtung im Hinblick auf die Einbauverhältnisse unempfindlich macht. Tatsächlich haben geringfügige Schrägstellungen des räumlichen Tragflächenprofils im Vergleich zur Strömung des Fluids praktisch keine Auswirkung. Das heißt, ein etwaiges Kippen und/oder Verdrehen der Sonde mit dem angenäherten räumlichen Tragflächenprofil beeinflusst die hiermit durchgeführten Differenzdruckmessungen kaum bzw. praktisch nicht. Hierin sind die wesentlichen Vorteile zu sehen.

Nach vorteilhafter Ausgestaltung ist die Sonde im Wesentlichen symmetrisch im Vergleich zu einer mittigen Symmetrieebene ausgebildet. "Echte" Tragflächenprofile sind demgegenüber regelmäßig nicht symmetrisch ausgelegt, um den für das Fliegen erforderlichen Auftrieb zu erzeugen. Aus diesem Grund beobachtet man bei dem erfindungsgemäßen räumlichen Tragflächenprofil auch keine Profilwölbung. Die Skelettlinie ist nicht gewölbt und die Profilsehne sowie die Skelettlinie fallen zusammen.

Dabei ist die Auslegung meistens so gewählt, dass die Symmetrieebene gegenüber welcher die Sonde in ihrer räumlichen Ausprägung in der Art des Tragflächenprofils symmetrisch ausgelegt ist, durch die bereits angesprochene Profilsehne hindurchgeht. Demgegenüber ist die Hinterkante überwiegend gerade ausgelegt. Dadurch kann die Hinterkante einerseits als gezielte Sammelfläche für etwaige Ablagerungen genutzt werden, weil in diesem Bereich der Druck niedrig ist. Andererseits ermöglicht die gerade Hinterkante eine kompakte Bauweise mit geringer Profiltiefe, welche den Einbau in eine Leitung begünstigt. Tatsächlich erlaubt die geringe Profiltiefe einen ungehinderten Einbau in beispielsweise runde und entsprechend ausgelegte Öffnungen in der besagten Leitung.

Die jeweilige Messstelle ist im Regelfall als Eintrittsöffnung für das meistens gasförmige Fluid ausgebildet. Dabei kommuniziert die jeweilige Eintrittsöffnung über einen Messkanal mit einem Drucksensor. Meistens verlaufen beide Messkanäle überwiegend parallel zueinander, so dass die beiden Drucksensoren für einerseits die Messstelle an der Profilvorderkante und andererseits die Messstelle an der Profilseitenkante unmittelbar benachbart zueinander ausgangsseitig der Messkanäle angeordnet werden können. Selbstverständlich lassen sich die beiden Messkanäle auch unmittelbar einem entsprechend ausgelegten Differenzdrucksensor je nach Bedarf zuführen.

Die Messstelle an der Profilvorderkante der in der Art eines räumlichen Tragflächenprofils ausgelegten Sonde wird überwiegend mit einem seitens des zu messenden und strömenden (gasförmigen) Fluids erzeugten mehr oder minder hohen Staudruck beaufschlagt. Zu diesem hohen Staudruck korrespondiert eine relativ geringe Strömungsgeschwindigkeit. Demgegenüber ist die Strömungsgeschwindigkeit im Bereich der Profilseitenkante bzw. im Bereich beider Profilseitenkanten an der anderen Messstelle hoch. Als Folge hiervon wird hier ein gegenüber dem hohen frontseitigen Staudruck deutlich geringerer Druck aufgrund des Bernoulli-Effektes beobachtet. Beide Messstellen finden sich in Bereichen einer überwiegend laminaren und größtenteils wirbelfreien Strömung, so dass Druckschwankungen kaum beobachtet werden. Zugleich stellt sich eine hohe Druckdifferenz zwischen der Messstelle an der Profilvorderkante mit dem hohen Staudruck und der Messstelle an der Profilseitenkante mit dem deutlich geringeren dynamischen Druck ein. Tatsächlich werden an dieser Stelle Druckunterschiede zwischen den Messstellen beobachtet, die zu einem Verstärkungsfaktor von ca. zwei korrespondieren. Das heißt, der Staudruck an der Profilvorderkante ist doppelt so groß wie der Druck an der Profilseitenkante oder noch mehr.

Tatsächlich werden im Detail Druckunterschiede im Bereich von ca. 100 Pa bis zu 400 Pa beobachtet, und zwar bei mittleren Geschwindigkeiten des Fluids von ca. 20 m/s.

Um an dieser Stelle das Messsignal noch weiter zu vergleichsmäßigen, sind die beiden Messstellen jeweils als Messstellenschar ausgebildet. Das bedeutet konkret, dass mehrere Eintrittsöffnungen an der Profilvorderkante und mehrere Eintrittsöffnungen an der Profilseitenkante unter jeweiliger Definition der zugehörigen Messstellenschar vorgesehen sind. Durch den Rückgriff auf mehrere Eintrittsöffnungen im Bereich der jeweiligen Messstelle werden etwaige Druckschwankungen vergleichmäßigt und findet gleichsam eine gemittelte Messung über die einzelnen Eintrittsöffnungen betrachtet statt. Denn die sämtlichen Eintrittsöffnungen der Messstellenschar sind gemeinsam an den zugehörigen Messkanal angeschlossen.

In diesem Zusammenhang hat es sich als besonders vorteilhaft erwiesen, wenn die Messstellen an der Profilseitenkante im Bereich maximaler Profildicke des Tragflächenprofils angeordnet sind. Außerdem empfiehlt es sich, die Eintrittsöffnungen an der jeweiligen Messstelle über die Länge des räumlichen Tragflächenprofils verteilt anzuordnen. Tatsächlich mögen die einzelnen Eintrittsöffnungen in einer Reihe in Axialrichtung platziert werden.

Die Sonde ist im Wesentlichen zweiteilig aufgebaut. Tatsächlich setzt sich die Sonde aus dem Tragflächenprofilabschnitt und dem Anschlussabschnitt zusammen. Der Tragflächenprofilabschnitt ist in der Art des räumlichen Tragflächenprofils ausgebildet, wohingegen der Anschlussabschnitt überwiegend zylindrisch ausgelegt ist und in seinem Innern lediglich die beiden Messkanäle aufnimmt.

Mit Hilfe des Anschlussabschnittes werden die Messkanäle nach außerhalb beispielsweise einer Leitung geführt. Bei dieser Leitung kann es sich um die Gasabsaugleitung handeln. Ganz besonders bevorzugt ist eine Gasabsaugleitung für Bewetterungsgase zur Erfassung der ausströmenden Gasmenge mit der erfindungsgemäßen Einrichtung ausgerüstet. Die ausströmende Gasmenge mag in einem Bergwerk aufgefangen werden. Mit Hilfe der erfindungsgemäßen Einrichtung kann nun die Geschwindigkeit des abgesaugten Wettergases bzw. Bewetterungsgases im Beispielfall ermittelt werden. In Verbindung mit dem zur Verfügung stehenden Strömungsquerschnitt lassen hieraus Rückschlüsse auf die volumetrische Gasmenge ziehen. Diese wiederum gibt Aufschluss über beispielsweise die tatsächliche Menge an abgesaugtem Methan, wenn zusätzlich der Methangehalt in dem abgesaugten Gas bekannt ist.

Der Tragflächenprofilabschnitt als solcher ist in der Regel als in den zu untersuchenden Fluidstrom ragender Stutzen ausgebildet. Dieser Stutzen verfügt über den als Tragflächenprofil ausgebildeten Querschnitt. Dabei hat es sich als besonders günstig erwiesen, wenn die Sonde bzw. ihr Tragflächenprofil im Querschnitt eine Dickenrücklage von 20 % bis 40 %, vorzugsweise 25 % bis 35 % und ganz besonders bevorzugt eine solche von ca. 30 % aufweist. Die Dickenrücklage gibt bekanntermaßen den Abstand der maximalen Profildicke des Tragflächenprofils von der Vorderkante im Verhältnis zur Profiltiefe an. Man kann in diesem Zusammenhang auch von der relativen Dickenrücklage sprechen.

Darüber hinaus verfügt das Tragflächenprofil bzw. der Tragflächenprofilabschnitt im Querschnitt über ein Dickenverhältnis von ca. 50 % bis 70 %, insbesondere ca. 60 % bzw. 0,5 bis 0,7, insbesondere 0,6. Das Dickenverhältnis setzt die maximale Profildicke des Tragflächenprofils ins Verhältnis zur Profiltiefe, also dem Abstand von der Profilvorderkante zur Profilhinterkante. Insbesondere mag es sich bei dem gewählten Tragflächenprofil um ein sogenanntes NACA-Profil handelt, also einen zweidimensionalen Querschnitt eines Tragflächenprofils, welcher vom National Advisory Committee for Aeronautics (NACA) für den Entwurf von Tragflächen entwickelt wurde.

Da erfindungsgemäß die Profilhinterkante gerade ausgebildet ist, wird insgesamt und nur angenähert ein Tragflächenprofil erfindungsgemäß realisiert. Das gilt auch vor dem Hintergrund, dass die Sonde bzw. deren Tragflächenprofilabschnitt spiegelsymmetrisch im Vergleich zu der mittigen und durch die Profilsehne gehenden Symmetrieebene ausgebildet ist.

Im Ergebnis wird eine Einrichtung zur Messung der Geschwindigkeit eines Fluids zur Verfügung gestellt, die über eine spezielle Form der Sonde ähnlich einem räumlichen Tragflächenprofil verfügt. Dadurch lassen sich die beiden Messstellen zur Differenzdruckmessung einerseits an der Profilvorderkante und andererseits an einer Profilseitenkante oder an beiden Profilseitenkanten realisieren. Meistens werden beide Profilseitenkanten in die Messung mit einbezogen, weil es sich bei der Sonde um ein symmetrisches räumliches Gebilde mit im Querschnitt dem Tragflächenprofil handelt. Außerdem lassen sich hierdurch etwaige Druckschwankungen oder Druckunterschiede zwischen den beiden Profilseitenkanten vergleichmäßigen.

Auf diese Weise wird ein hoher Differenzdruck erzeugt und ist die Sonde insgesamt gegenüber verschiedenen Einbaulagen relativ unempfindlich. Zugleich werden Verschmutzungen der Messstellen praktisch vermieden und wird aufgrund der strömungsgünstigen Gestaltung der Sonde die Strömung des Fluids in beispielsweise einer Leitung nicht oder praktisch nicht beeinflusst. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1.: die erfindungsgemäße Einrichtung schematisch und
- Fig. 2: die Einrichtung nach Fig. 1 eingebaut in eine Leitung mit den zu erwartenden Strömungsverhältnissen.

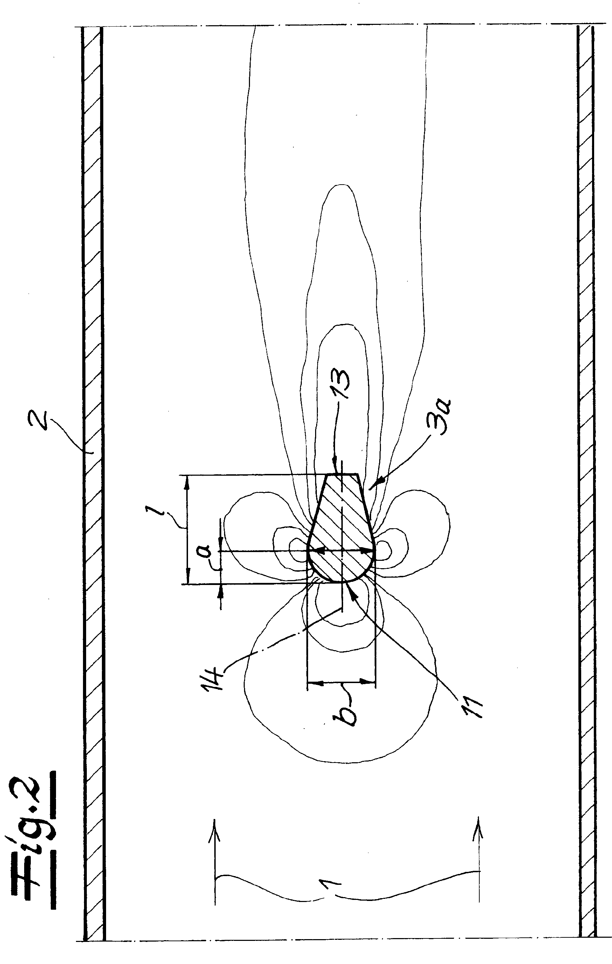

In den Figuren ist eine Einrichtung zur Messung der Geschwindigkeit eines Fluids 1 dargestellt. Das Fluid 1 durchströmt eine Leitung 2 in der in Fig. 2 durch Pfeile angedeuteten Strömungsrichtung. Im Ausführungsbeispiel und nicht einschränkend handelt es sich bei der Leitung 2 um eine Gasabsaugleitung 2, über welche Bewetterungsgase bzw. Wettergase 1 einer anschließenden Nutzung zugeführt werden. Mit Hilfe der nachfolgend noch im Detail zu beschreibenden Einrichtung wird nun die Geschwindigkeit des fraglichen Fluids 1, im Ausführungsbeispiel die Geschwindigkeit des Wettergases 1, gemessen. Bei dem Wettergas bzw. Bewetterungsgas 1 handelt es sich um ein Luftgemisch, in dem beispielsweise Methan bestimmter Konzentration vorhanden ist.

Damit das Luftgemisch bzw. Bewetterungsgas 1 zielgenau einer weiteren Nutzung beispielsweise als Stadtgas zugeführt werden kann, muss nicht nur die Methangaskonzentration im Beispielfall bekannt sein, sondern ist auch die genaue Kenntnis der Geschwindigkeit des Fluids bzw. Bewetterungsgases 1 von entscheidender Bedeutung. Dies wurde einleitend bereits dargelegt.

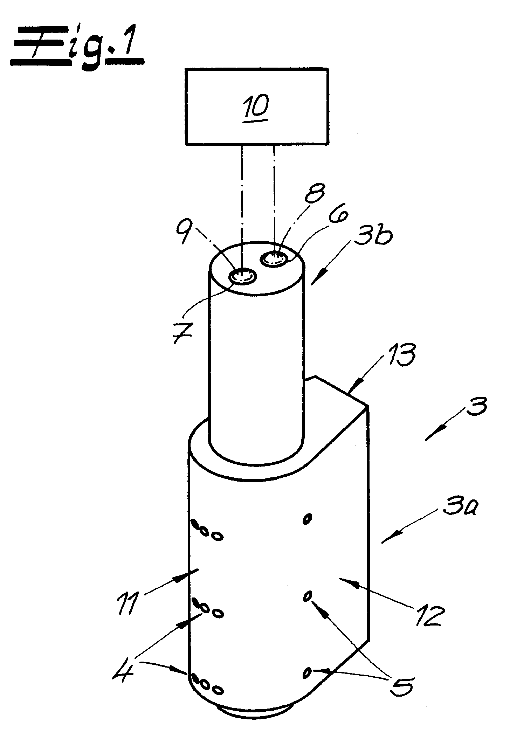

Die fragliche Einrichtung verfügt zu diesem Zweck über eine Sonde 3, die perspektivisch in der Fig. 1 dargestellt ist. Die Sonde 3 ist im Ausführungsbeispiel zweiteilig ausgeführt und verfügt über einen Tragflächenprofilabschnitt 3a und einen Anschlussabschnitt 3b. Der Tragflächenprofilabschnitt 3a taucht in die Leitung 2 ein, wohingegen der Anschlussabschnitt 3b aus einer nicht ausdrücklich dargestellten Öffnung vorkragt. Man erkennt, dass die Sonde 3 bzw. deren Tragflächenprofilabschnitt 3a in der Art eines räumlichen Tragflächenprofils ausgebildet ist. Tatsächlich verfügt die Sonde 3 bzw. deren Tragflächenprofilabschnitt 3a über ein Profil im Querschnitt, welches ausweislich der Darstellung in Fig. 2 einem Tragflächenprofil angenähert ist bzw. ähnelt.

Um nun die Luftgeschwindigkeit des Fluids 1 zu messen, sind zwei Messstellen 4, 5 an der Sonde 3 vorgesehen. Bei den Messstellen 4, 5 handelt es sich jeweils um Eintrittsöffnungen 4, 5 für das Fluid 1. Die Eintrittsöffnungen 4, 5 kommunizieren mit einem zugehörigen Messkanal 6, 7. Dabei sind die Eintrittsöffnungen 5 jeweils mit dem Messkanal 6 verbunden. Die Eintrittsöffnungen 4 kommunizieren demgegenüber sämtlich mit dem hiervon getrennt ausgelegten Messkanal 7. Der jeweilige Messkanal 6, 7 ist mit einem lediglich angedeuteten und zugehörigen Drucksensor 8, 9 ausgerüstet. Dabei ist der Drucksensor 8 dem Messkanal 6 zugeordnet, wohingegen der Drucksensor 9 zu dem Messkanal 7 gehört. Selbstverständlich kann auch ein kombinierter (Differenz-) Drucksensor 8, 9 vorgesehen werden, an welchen die beiden Messkanäle 6, 7 angeschlossen sind.

Ausgangsseitig der Messkanäle 6, 7 stehen unterschiedliche Druckwerte bzw. Drucke des Fluids 1 an, so dass mit Hilfe der Drucksensoren 8, 9 eine Differenzdruckmessung vorgenommen wird. Diese Differenzdruckmessung mag in einer Steuereinheit 10 ausgewertet und aufgenommen werden, an welche die beiden Drucksensoren 8, 9 im Beispielfall angeschlossen sind.

Man erkennt, dass die eine Messstelle 4 an einer Profilvorderkante 11 des räumlichen Tragflächenprofils bzw. des Tragflächenprofilabschnittes 3a angeordnet ist. Demgegenüber findet sich die andere Messstelle 5 an einer Profilseitenkante 12 bzw. an beiden sich gegenüberliegenden Profilseitenkanten 12.

Darüber hinaus verfügt das räumliche Tragflächenprofil noch über eine Profilhinterkante 13, welche im Ausführungsbeispiel gerade ausgelegt ist.

Anhand der Fig. 1 wird deutlich, dass die beiden Messstellen 4, 5 jeweils als Messstellenschar 4, 5 ausgebildet sind. Tatsächlich finden sich nämlich an der Profilvorderkante 11 mehrere Eintrittsöffnungen 4, welche die betreffende Messstelle 4 respektive die Messstellenschar 4 definieren. An der jeweiligen Profilseitenkante 12 sind ebenfalls mehrere Eintrittsöffnungen 5 realisiert, welche die Messstelle 5 bzw. die zugehörige Messstellenschar 5 definieren. Im Rahmen des Ausführungsbeispiels ist das Tragflächenprofil bzw. der Tragflächenprofilabschnitt 3a an seinen beiden gegenüberliegenden Seitenkanten 12 mit jeweils Eintrittsöffnungen 5 bzw. Messstellen 5 ausgerüstet. Sämtliche Messstellen 5 münden in den Messkanal 6. Das gilt auch für sämtliche Messstellen 4, die demgegenüber mit dem Messkanal 7 kommunizieren.

Man erkennt, dass die Messstellen 4, 5 bzw. die zugehörigen Eintrittsöffnungen 4, 5 über die Länge des Tragflächenprofilabschnittes 3a verteilt und in einer Reihe angeordnet sind. Tatsächlich formen die Messstellen bzw. Eintrittsöffnungen 4 an der Profilvorderkante 11 sowohl Reihen in Axialrichtung bzw. Längsrichtung des Tragflächenprofilabschnittes 3a als auch solche in seiner Querrichtung. Demgegenüber definieren die Messstellen 5 an der jeweiligen Profilseitenkante 12 jeweils nur eine Reihe in Axialrichtung bzw. Längsrichtung des Tragflächenprofilabschnittes 3a. Auf diese Weise steht in dem jeweiligen Messkanal 6, 7 ein gemittelter Druck zur Verfügung, welcher von dem zugehörigen Drucksensor 8, 9 erfasst wird.

Die Darstellung nach Fig. 2 macht deutlich, dass die Sonde 3 im Wesentlichen symmetrisch im Vergleich zu einer mittigen Symmetrieebene 14 ausgebildet ist. Dabei geht die Symmetrieebene 14 durch eine Profilsehne des Tragflächenprofils hindurch. Diese Profilsehne verbindet die Profilvorderkante 11 mit der Profilhinterkante 13.

Das Tragflächenprofil bzw. der Tragflächenprofilabschnitt 3a besitzt eine Dickenrücklage a von ca. 0,3 respektive 30 %. Die Dickenrücklage a bzw. relative Dickenrücklage a bezeichnet den Abstand der maximalen Profildicke b von der Profilvorderkante 11. Die maximale Profildicke b des Tragflächenprofilabschnittes 3a ist durch einen Abstandspfeil b in der Fig. 2 angedeutet. Jedenfalls ist die Dickenrücklage a, also der Abstand der Profilvorderkante 11 bis hin zu dem Abstandspfeil b als Kennzeichnung der maximalen Profildicke im Bereich von ca. 0,3 angesiedelt im Vergleich zu Profiltiefe I. Die Profiltiefe I gibt den Abstand zwischen der Profilvorderkante 11 und der Profilhinterkante 13 an und ist ebenfalls in der Fig. 2 eingetragen. Die maximale Profildicke b findet sich also in etwa auf einem Drittel des Weges von der Profilvorderkante 11 zur Profilhinterkante 13.

Darüber hinaus verfügt der in der Fig. 2 dargestellte Tragflächenprofilabschnitt 3a bzw. das Tragflächenprofil der Sonde 3 über ein Dickenverhältnis von ca. 0,6. Dieses Dickenverhältnis setzt die maximale Profildicke b ins Verhältnis zur Profiltiefe I. Das heißt, das Verhältnis b : I liegt im Rahmen des Ausführungsbeispiels bei ca. 0,6. Diese sämtlichen Angaben sind natürlich nur beispielhaft und nicht zwingend zu verstehen.

Jedenfalls stellt sich bei einer solchen Auslegung und Symmetrie sowie unter Berücksichtigung einer Geschwindigkeit von ca. 20 m/s des Fluids 1 ein Druckunterschied zwischen den beiden Messstellen 4, 5 ein, welcher im Bereich von deutlich mehr als 100 Pa angesiedelt ist. Tatsächlich wird im Bereich der Profilvorderkante 11 ein relativ hoher Staudruck beobachtet, welcher zu einer niedrigen Geschwindigkeit in diesem Bereich korrespondiert. Das deuten entsprechende Linien gleicher Geschwindigkeit in der Fig. 2 an. Demgegenüber wird an den jeweiligen Profilseitenkanten 12 mit den dortigen Messstellen 5 eine deutlich höhere Geschwindigkeit beobachtet, welche nahezu das zweifache betragen kann.

Da der Druck zum Quadrat der Strömungsgeschwindigkeit proportional ist, lassen sich Druckunterschiede zwischen den beiden Messstellen 4, 5 beobachten, die weit über dem Faktor zwei bis hin zum Faktor vier angesiedelt sind. Anders ausgedrückt, ist der Druck an der Messstelle 4 im Bereich der Profilvorderkante 11 bis zu viermal so hoch wie an der Profilseitenkante 12 und der dortigen Messstelle 5. Dadurch wird ein besonders ausgeprägtes Differenzdrucksignal an den beiden zugehörigen Drucksensoren 8, 9 zur Verfügung gestellt, welches eine besonders genaue Messung der Strömungsgeschwindigkeit des Fluids 1 ermöglicht.

## Patentansprüche

1. Einrichtung zur Messung der Luftgeschwindigkeit in Absaugleitungen (2), mit einer in eine Gasabsaugleitung für Bewetterungsgase (1) einsetzbaren Sonde (3), zur Erfassung der ausströmenden Gasmenge, wobei
- die Sonde (3) wenigstens zwei Messstellen (4, 5) zur Differenzdruckmessung aufweist und in der Art eines räumlichen Tragflächenprofils ausgebildet ist, wobei ferner
- die Sonde (3) im Wesentlichen zweiteilig mit einem Tragflächenprofilabschnitt (3a) und einem Anschlussabschnitt (3b) ausgebildet ist, und wobei
- der Tragflächenprofilabschnitt (3a) eine überwiegend gerade Profilhinterkante (13) und ein Dickenverhältnis (b/l) von ca. 0,5 bis 0,7 aufweist.

2. Einrichtung nach Anspruch 1, **dadurch gekennzeichnet, dass** die eine Messstelle (4) an einer Profilvorderkante (11) und die andere Messstelle (5) an wenigstens einer Profilseitenkante (12) angeordnet sind.

3. Einrichtung nach Anspruch 1 oder 2, **dadurch gekennzeich**n e t , dass die Sonde (3) im Wesentlichen symmetrisch im Vergleich zu einer mittigen Symmetrieebene (14) ausgebildet ist.

4. Einrichtung nach Anspruch 3, **dadurch gekennzeichnet, dass** die Symmetrieebene (14) durch eine Profilsehne des Tragflächenprofils hindurchgeht.

5. Einrichtung nach einem der Ansprüche 1 bis 4, **dadurch gekennzeichnet, dass** die jeweilige Messstelle (4, 5) als Eintrittsöffnung (4, 5) für Fluid (1) ausgebildet ist, welche jeweils über einen Messkanal (6, 7) mit einem Drucksensor (8, 9) kommuniziert.

6. Einrichtung nach einem der Ansprüche 1 bis 5, **dadurch gekennzeichnet, dass** die beiden Messstellen (4, 5) jeweils als Messstellenschar (4, 5) ausgebildet sind.

7. Einrichtung nach Anspruch 6, **dadurch gekennzeichnet, dass** mehrere Eintrittsöffnungen (4) an der Profilvorderkante (11) und mehrere Eintrittsöffnungen (5) an der jeweiligen Profilseitenkante (12) unter jeweiliger Definition der zugehörigen Messstellenschar (4, 5) vorgesehen sind.

8. Einrichtung nach einem der Ansprüche 1 bis 7, **dadurch gekennzeichnet, dass** die Messstelle (5) an der Profilseitenkante (12) im Bereich maximaler Profildicke (b) des Tragflächenprofils angeordnet ist.

9. Einrichtung nach einem der Ansprüche 1 bis 8, **dadurch gekennzeichnet, dass** zwischen den Messstellen (4, 5) Druckunterschiede im Bereich von einem Faktor zwei oder mehr vorhanden sind.

10. Einrichtung nach einem der Ansprüche 1 bis 9, **dadurch ge- kennzeichnet,** dass der Tragflächenprofilabschnitt (3a) mit einem Dickenverhältnis (b/l) von insbesondere ca. 0,6 ausgerüstet ist.

11. Einrichtung nach einem der Ansprüche 1 bis 10, **dadurch gekennzeichnet, dass** der Tragflächenprofilabschnitt (3a) als in den zu untersuchenden Strom des Fluids (1) ragender Stutzen mit als Tragflächenprofil ausgebildetem Querschnitt ausgeführt ist.

12. Einrichtung nach einem der Ansprüche 1 bis 11, dadurch g e - kennzeichnet, dass der Tragflächenprofilabschnitt (3a) eine Dickenrücklage (a) von ca. 20 % bis 40 %, vorzugsweise 25 % bis 35 % und ganz besonders bevorzugt von ca. 30 % aufweist.

13. Gasabsaugleitung (2) für Bewetterungsgase (1) mit einer Einrichtung nach einem der Ansprüche 1 bis 12, wobei die Sonde (3) in die Gasabsaugleitung (2) zur Erfassung der ausströmenden Gasmenge eingesetzt ist.

## Claims

1. A device for measuring the air speed in suction lines (2), having a probe (3) which can be inserted into a gas suction line for ventilation gases (1), for detecting the outflowing gas quantity, wherein
- the probe (3) has at least two measurement points (4, 5) for differential pressure measurement and is constructed in the manner of a spatial aerofoil profile, wherein furthermore
- the probe (3) is constructed essentially in two parts with an aerofoil-profile section (3a) and a connection section (3b), and wherein
- the aerofoil-profile section (3a) has a predominantly straight profile trailing edge (13) and a thickness ratio (w/l) of approx. 0.5 to 0.7.

2. The device according to Claim 1, **characterised in that** the one measurement point (4) is arranged at a profile leading edge (11) and the other measurement point (5) is arranged on at least one profile side edge (12).

3. The device according to Claim 1 or 2, **characterised in that** the probe (3) is constructed essentially symmetrically compared to a central plane of symmetry (14).

4. The device according to Claim 3, **characterised in that** the plane of symmetry (14) passes through a chord of the aerofoil profile.

5. The device according to one of Claims 1 to 4, **characterised in that** the respective measurement point (4, 5) is constructed as an inlet opening (4, 5) for fluid (1), which communicates with a pressure sensor (8, 9) via a measurement channel (6, 7) in each case.

6. The device according to one of Claims 1 to 5, **characterised in that** the two measurement points (4, 5) are constructed as a group of measurement points (4, 5) in each case.

7. The device according to Claim 6, **characterised in that** a plurality of inlet openings (4) are provided on the profile leading edge (11) and a plurality of inlet openings (5) are provided on the respective profile side edge (12) under the respective definition of the associated group of measurement points (4, 5).

8. The device according to one of Claims 1 to 7, **characterised in that** the measurement point (5) is arranged on the profile side edge (12) in the region of maximum profile thickness (b) of the aerofoil profile.

9. The device according to one of Claims 1 to 8, **characterised in that** pressure differences in the range of a factor of two or more are present between the measurement points (4, 5).

10. The device according to one of Claims 1 to 9, **characterised in that** the aerofoil-profile section (3a) is equipped with a thickness ratio (w/l) of approx. 0.6 in particular.

11. The device according to one of Claims 1 to 10, **characterised in that** the aerofoil-profile section (3a) is realised as a nozzle protruding into the flow of fluid (1) to be investigated, with a cross section constructed as an aerofoil profile.

12. The device according to one of Claims 1 to 11, **characterised in that** the aerofoil-profile section (3a) has a depth setback (a) of approx. 20% to 40%, preferably 25% to 35% and very particularly preferably of approx. 30%.

13. A gas suction line (2) for ventilation gases (1) having a device according to one of Claims 1 to 12, wherein the probe (3) is inserted into the gas suction line (2) for detecting the outflowing gas quantity.

## Revendications

1. Dispositif de mesure de la vitesse de l'air dans des conduites d'extraction (2), comprenant une sonde (3) pouvant être insérée dans une conduite d'extraction des gaz pour des gaz d'aération (1) pour détecter la quantité de gaz sortants, dans lequel
- la sonde (3) présente au moins deux points de mesure (4, 5) pour mesurer la pression différentielle et est formée à la manière d'un profil de surface porteuse spatial, sachant qu'en outre
- la sonde (3) est essentiellement conçue en deux parties avec un segment de profil de surface porteuse (3a) et un segment de raccordement (3b), et sachant que
- le segment de profil de surface porteuse (3a) présente un bord de fuite de profil (13) principalement droit et une épaisseur relative (b/l) d'environ 0,5 à 0,7.

2. Dispositif selon la revendication 1, **caractérisé en ce que** l'un point de mesure (4) est disposé sur un bord d'attaque de profil (11) et l'autre point de mesure (5) est disposé sur au moins un bord latéral de profil (12).

3. Dispositif selon la revendication 1 ou 2, **caractérisé en ce que** la sonde (3) est conçue essentiellement symétrique en comparaison avec plan de symétrie médian (14).

4. Dispositif selon la revendication 3, **caractérisé en ce que** le plan de symétrie (14) traverse une corde du profil de surface porteuse.

5. Dispositif selon l'une des revendications 1 à 4, **caractérisé en ce que** le point de mesure (4, 5) respectif est conçu en tant qu'ouverture d'admission (4, 5) de fluide (1), qui communique respectivement avec un capteur de pression (8, 9) par le biais d'un canal de mesure (6, 7).

6. Dispositif selon l'une des revendications 1 à 5, **caractérisé en ce que** les deux points de mesure (4, 5) sont respectivement conçus en tant que bande de points de mesure (4, 5).

7. Dispositif selon la revendication 6, **caractérisé en ce que** plusieurs ouvertures d'admission (4) sont prévues sur le bord d'attaque de profil (11) et plusieurs ouvertures d'admission (5) sont prévues sur le bord latéral de profil respectif (12) en définissant respectivement la bande de points de mesure (4, 5) correspondante.

8. Dispositif selon l'une des revendications 1 à 7, **caractérisé en ce que** le point de mesure (5) est disposé sur le bord latéral de profil (12) au niveau de l'épaisseur de profil maximale (b) du profil de surface porteuse.

9. Dispositif selon l'une des revendications 1 à 8, **caractérisé en ce que** des différentes de pression de l'ordre d'un facteur de deux ou plus sont présentes entre les deux points de mesure (4, 5).

10. Dispositif selon l'une des revendications 1 à 9, **caractérisé en ce que** le segment de profil de surface porteuse (3a) est doté d'une épaisseur relative (b/l) d'environ 0,6.

11. Dispositif selon l'une des revendications 1 à 10, **caractérisé en ce que** le segment de profil de surface porteuse (3a) est conçu en tant que tubulure faisant saillie dans le flux d'analyse du fluide (1), avec une section transversale conçue en tant que profil de surface porteuse.

12. Dispositif selon l'une des revendications 1 à 11, **caractérisé en ce que** le segment de profil de surface porteuse (3a) présente un renfoncement d'épaisseur (a) d'environ 20 % à 40 %, de préférence de 25 % à 35 % et tout particulièrement de préférence d'environ 30 %.

13. Conduite d'extraction des gaz (2) pour des gaz d'aération (1) comprenant un dispositif selon l'une des revendications 1 à 12, dans lequel la sonde (3) est insérée dans la conduite d'extraction des gaz (2) pour détecter la quantité de gaz sortants.
